# EUROPEAN PATENT APPLICATION

(11) **EP 4 016 412 A1**
(43) Date of publication of application: **22.06.2022**
(21) Application number: 20215790.5
(22) Date of filing: 18.12.2020
(51) Int. Cl.: G06Q 10/04, G08G 1/01

(54) **TRAFFIC PREDICTION**

(71) Applicant: Imec VZW, 3001 Leuven (BE); Universiteit Antwerpen, 2000 Antwerpen (BE)
(72) Inventor: BOGAERTS, Toon, 2100 DEURNE (BE); BOSMANS, Stig, 2950 KAPELLEN (BE); CASTEELS, Wim, 2100 DEURNE (BE)
(74) Representative: IP HILLS NV

(57) **Abstract**

Example embodiments describe a computer implemented method for training a learning model for traffic prediction at respective localities by means of a learning system comprising a convolution engine and an encoder-decoder, the method comprising: constructing a graph representation of the localities based on a spatial relation between the respective localities; populating the constructed graph with traffic data characterizing the traffic in the respective localities at respective time periods; convolving, by the convolution engine, for a respective locality and for a respective time period, the traffic data in the respective locality with the traffic data in its neighbouring localities, thereby obtaining relation-based traffic representation; processing, by the encoder-decoder, for a respective locality and for a respective time period, the relation-based traffic representation, thereby obtaining a gradient information; and updating, for a respective locality, the learning model with the obtained gradient information, thereby training the learning model.

## Description

### Technical Field

The present disclosure generally relates to traffic prediction and, more particularly, to a method and a data processing system for traffic prediction.

### Background

Traffic congestion costs valuable time, obstructs the movement of goods, impacts the air quality as well as the safety on the roads. Traffic congestion on the road networks is caused by the considerable number of vehicles exceeding the capacity of the road networks. Similarly, a considerable number of people on walkways also lead to traffic congestions on the roads. In addition to that, bad weather conditions and road incidents such as traffic accidents, roadworks, and/or works on the walkways, cause unexpected delays and may even stall the traffic for an extended period of time.

Traffic prediction is the task of forecasting traffic information based on actual and historical traffic data such as traffic flow, average traffic speed, and traffic incidents. Accurate traffic predictions allow for smarter routing choices and therefore a more balanced traffic load on the road network and/or pedestrian network. Further, it allows for reducing the impact of the weather conditions and traffic incidents on the overall traffic flow. This ultimately leads to reduced overall traffic congestion and air pollution levels.

State of the art traffic prediction techniques are based on machine learning. Such systems, however, either fail to capture the actual physical characteristics of the road network and/or fail to preserve the spatial and temporal relation of the traffic data resulting in poor traffic predictions. Further, training such systems is very a tedious and costly process as they require a vast amount of training data.

### Summary

It is an object of embodiments of the present disclosure to enable an accurate and computationally efficient traffic prediction. It is a further object of embodiments of the present disclosure to enable learning of the spatial and temporal relationship among the various localities. It is yet a further object of embodiments of the present disclosure to enable the transfer of learning knowledge from one locality to another locality.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by a computer-implemented method for training a learning model for traffic prediction at respective localities by means of a learning system comprising a convolution engine and an encoder-decoder, the method comprising:
- constructing a graph representation of the localities based on a spatial relation between the respective localities;
- populating the constructed graph representation with traffic data characterizing the traffic in the respective localities at respective time periods;
- convolving, by the convolution engine, for a respective locality and for a respective time period, the traffic data in the respective locality with the traffic data in its neighbouring localities, thereby obtaining relation-based traffic representation;
- processing, by the encoder-decoder, for a respective locality and for a respective time period, the relation-based traffic representation, thereby obtaining a gradient information; and
- updating, for a respective locality, the learning model with the obtained gradient information, thereby training the learning model.

In other words, a graph representation with nodes representing the respective localities, such as the road in a road network, and edges representing the connection between them, is constructed. The constructed graph is then populated with the traffic data characterizing the traffic in the respective localities for a respective period of time, for example, several hours, days, weeks, or even months. Next, for each respective locality, a learning model for traffic prediction is trained by means of a learning system comprising a convolution engine and an encoder-decoder. For this purpose, the convolution engine convolves the traffic data observed at a respective locality with the traffic data of its neighbouring localities. The convolution is performed for a respective time period of, for example, 5 to 60 min. This results in a relation-based traffic representation that holds information about the relation between the traffic in the locality in question and the traffic in its neighbours over time or, in other words, how the traffic in the neighbouring localities affects the traffic in the locality in question during the respective time period. In other words, the obtain relation-based traffic information not only captures but also preserves the spatial-temporal relation of the traffic among interconnected localities. Next, this relation-based traffic representation is processed by the encoder-decoder to obtain gradient information which is then used to update the parameters of the encoder-decoder and the convolution engine, i.e. to update the learning model of the respective locality and, thus, training the respective learning model. The same steps of correlating, processing, and updating are performed for all localities within the graph representation, thereby training the learning models for the respective localities.

Training the learning models for the respective localities based on the correlated traffic data, allows the learning models, once trained, to accurately predict the traffic at the respective localities as the spatial-temporal relation of the traffic among interconnected localities is accounted for.

According to an example embodiment, the obtained gradient information is used as gradient information for updating a learning model associated with one or more other localities.

In other words, the gradient information for training a learning model of one locality may be used as the gradient information to train the learning model of one or more other localities. The other localities may be localities from the same network, such as direct or indirect neighbouring localities, or even localities in other networks. As a result, the gradient information used for training the learning model of one road may be used to train the learning models of other roads, irrespective of the fact whether the roads are from the same road network, i.e. the same city road network, or another road network. This re-use of gradient information allows for a time-efficient and cost-effective training of the learning models.

According to an example embodiment, the processing further comprises taking into account the relation-based traffic representation for the latest time periods within a selected time interval.

In other words, the processing may further take into account the relation-based traffic representation observed at one or more past time periods. Thus, not only current but also historic relation-based traffic representation may be taken into account during the training of the learning model. Doing so allows improving the accuracy of the learning model as now also trends in the traffic may be taken into account.

According to an example embodiment, the convolving takes into account information characterizing the respective localities.

In other words, other information characterizing the different localities such as the road type and road category, dimensions, speed limit, number of lanes, lanes dimensions, date and time, weather, season, incidents, construction zones, and so on, may be taken into account. Considering this information during the training of the learning model allows accounting for the road characteristics, condition, and capacity as well as environmental and other factors impacting the traffic. As a result, the accuracy of the learning model for traffic prediction is further improved as the model is capable to predict the effect of the above factors on the traffic.

According to example embodiments, the neighbouring localities comprise direct and, optionally, indirect neighbouring localities.

In other words, the traffic data and, optionally, the information characterizing the direct and, possibly, the indirect neighbouring localities may be taken into account. As a result, the training of the learning model for a respective locality may also take into account the impact of the traffic in its neighbouring localities as well as their characteristics and, possibly, any other factors impacting the traffic in the locality. This allows enables the learning model to accurately predict trends in the traffic for the respective locality by accounting for the traffic in the neighbouring localities, and possibly their characteristics and other possible factors affecting the traffic.

According to an example embodiment, the traffic data comprises traffic information matched to the respective localities and comprising at least a start time and time duration, a travelled distance, and an average speed.

In other words, the traffic data comprises GPS traces that are matched or mapped to the localities in the road network for example. The GPS traces may further include start time, time duration, travelled distance, and even average speed information.

According to an example embodiment, the traffic information associated with the respective localities is aggregated over a period of time.

The GPS traces may be aggregated over a period of time, for example, over a period of 1 to 30 min. Aggregating the GPS traces allows obtaining a more reliable representation of the traffic data in the respective localities. In other words, the GPS traces of an individual vehicle has less impact on the overall traffic data.

According to an example embodiment, the traffic information is processed to compensate for missing traffic data.

In some cases, the traffic data is sparse, i.e. traffic data is missing for some time periods. For example, sparse traffic data is observed during the night, or, when obtained from ride-hailing services. Missing traffic data may impact the prediction in localities such as non-primary road, where the traffic is less frequent. In such a case, it is beneficial to compensate for the missing traffic data to account for it.

According to an example, embodiment, the traffic information is obtained from at least one of GPS tracking systems, traffic cameras, inductive-loops traffic detectors, and GSM networks.

In other words, traffic information from one or more traffic sources may be used. Using traffic information from different sources allows obtaining more complete traffic information on the road in the road network.

According to an example embodiment, the graph is a directed graph representing a direction of traffic in a respective locality.

A directed graph comprises nodes connected by directed edges which may be one-directional or bi-directional. For example, a first road with one-directional traffic towards a second road may be represented in the directed graph by two nodes interconnected with an edge directed from the first node towards the second one, i.e. an arrow with an initial point originating at the first node and a terminal point terminating at the second node. Employing a directed graph allows capturing the directionality of the traffic in the graph representation and therefore to take it into account during the training of the learning model. As a result, the accuracy of the traffic prediction is further improved as the learning model is capable of taking into account the directionality of the traffic.

According to an example embodiment, the encoder-decoder is a Long Short-Term Memory encoder-decoder.

According to an example embodiment, the traffic data is vehicle data traffic or foot traffic data.

In other words, the learning model may be trained using vehicle or foot traffic data. Depending on the traffic data, the learning model may thus be trained to predict the vehicle traffic in a road network or the foot traffic in a pedestrian network, office or commercial buildings, or special events such as sports or concerts events.

According to a second example aspect, a data processing system is disclosed programmed for carrying out the method according to the first example aspect.

According to a third example aspect, a computer program product is disclosed comprising computer-executable instructions for causing at least one computer to perform the method according to the second example aspect when the program is run on a computer.

According to a third example aspect, a computer readable storage medium is disclosed comprising the computer program product according to the third example aspect.

The various example embodiments of the first example aspect may be applied as example embodiments to the second, third, and fourth example aspects.

### Brief Description of the Drawings

Some example embodiments will now be described with reference to the accompanying drawings.
FIG.1A shows GPS traces mapped to various roads according to an example embodiment of the present disclosure.
FIG.1B shows an illustration of traffic data obtained from GPS traces according to an embodiment of the present disclosure;
FIG.2A shows an example of traffic data mapped to an example road network according to an embodiment of the present disclosure.
FIG.2B shows a graph representation of the road network of FIG.2A according to an example embodiment of the present disclosure;
FIG.2C shows an example of features attributed to nodes in the graph according to an example embodiment of the present disclosure;
FIG.3A shows a flow diagram illustrating various steps of a method for training a learning model for traffic prediction according to an example embodiment of the present disclosure;
FIG.3B shows a block diagram illustrating selected components of the learning system according to an example embodiment of the present disclosure;
FIG.4A shows a diagram illustrating the step of convolving the traffic data according to an example embodiment of the present disclosure;
FIG.4B shows a diagram illustrating the step of encoding-decoding the output of the convolution according to an example embodiment of the present disclosure.

### Detailed Description of Embodiment(s)

The present disclosure relates to traffic prediction by means of a learning system comprising a convolution engine and an encoder-decoder. The learning system is used to train a learning model to predict future states of the traffic. The training is performed based on training traffic data which may be obtained from a variety of sources such as traffic cameras, inductive-loop traffic detectors, GSM network, and GPS tracking systems.

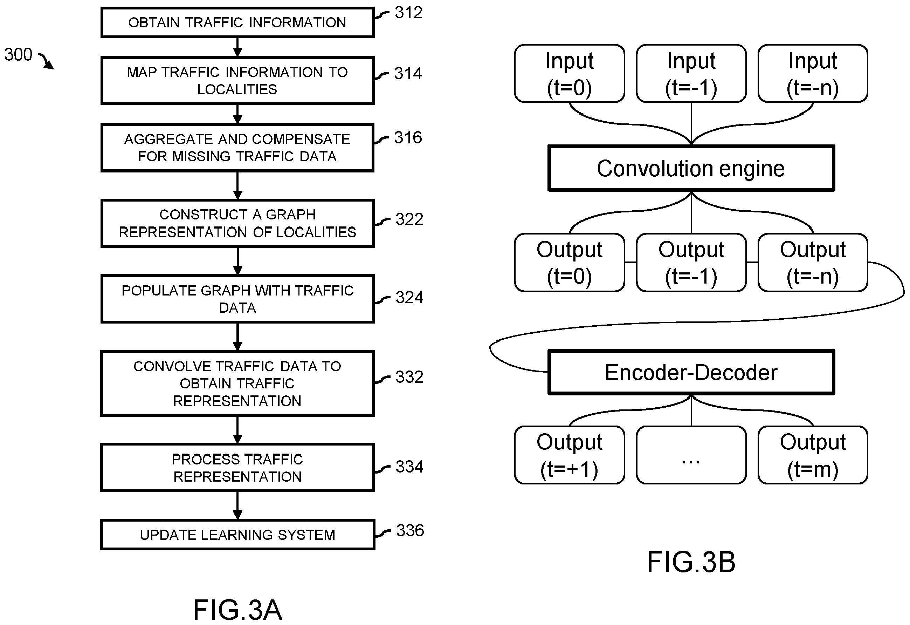

The training of the learning model for traffic prediction will be now described in detail with reference to FIG.3A.

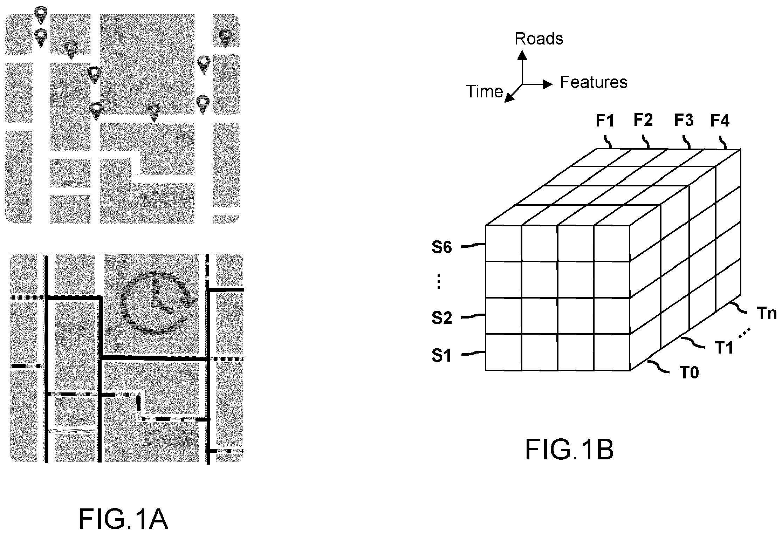

In the first step, traffic information is obtained 312. The traffic information may, for example, correspond to GPS traces that comprise traffic data recorded over several hours, days, weeks, or even months in the form of GPS locations logged during respective road trips, the start time, time duration, and the travelled distance of the respective trips, as well as, additional information such as the minimum, maximum and average speed of the logged trips. The GPS traces may further comprise additional information such as roads under construction, closed roads, etc. The GPS traces may be obtained, for example, from ride-hailing services, public transportation, and/or private vehicles such as cars, bikes, and bicycles equipped with a GPS tracking system. GPS traces are processed so that the traffic data recorded by the GPS traces may be mapped to the road network map. The processing consists of two steps: map-matching 314 and aggregation and data imputation 316. In the map-matching step 314, the GPS traces logged during a recorded trip are mapped to the road network as illustrated in the top plot of FIG.1A. Once, all the GPS traces are mapped to the road network as shown in the bottom plot in FIG.1A, the mapped traces are aggregated 316 over time intervals of, for example, 1 to 30 mins, to obtain traffic data aggregated over consecutive, non-overlapping time intervals. The duration of the time interval depends on the traffic prediction use-case scenario for which the learning model is used. For example, short-term traffic management requires fine updates within the future hour using intervals between 10 to 15 mins.

The aggregated traffic data for all roads is a multivariate time series which may be represented in the form of a three-dimensional data structure, i.e. a data cube. An example of such a data cube is shown in FIG.1B illustrating the various features of the aggregated traffic data, i.e. the number of cars, F1, the traffic density, F2, the traffic flow, F3, and the average speed, F4, observed in roads S1 to S6 at respective time intervals TO to Tn.

The aggregated traffic data is then further processed to compensate for missing traffic data. This processing is typically referred to as data imputation. Conventional algorithms such as linear interpolation and average-based data imputation algorithms such as mean substitution may be employed. Typically, linear interpolation algorithms are used to compensate for missing traffic data within a short time interval of, for example, 10 min or so, while average-based data imputation algorithms are used to compensate for missing data with occurring nature. For example, if traffic data on a specific Monday at 2 pm is missing, the average-based data imputation algorithm will fill this time interval with the average of the traffic data recorded on other Mondays at 2 pm. If no traffic data is recorded on Mondays at 2 pm, the algorithm will use the traffic data recorder at the same time interval irrespective of the day.

Notably, the traffic data obtained from the GPS traces may be complemented with traffic information obtained from other sources such as traffic cameras, inductive-loop traffic detectors, GSM network or other sources. The complementary traffic information may be processed in the same way as described above with respect to the GPS traces. The resulting data cube will thus comprise traffic information from different sources.

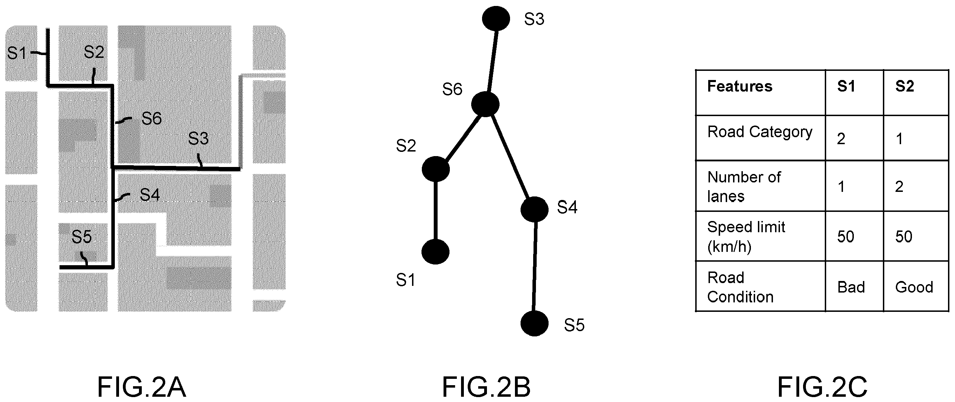

Next, the method proceeds to construct 322 a graph representing the interconnections of the road in the road network based on the spatial relation between the roads in the road network. FIG.2A shows an example road network in which road S1 connects to road S2 which in turn connects to road S6. Road S6 further connects with roads S3 and S4 which further connects with road S5. By taking into account the interconnection of the roads, i.e. roads S1 to S6, a graph representation is constructed as shown in FIG.2B. In this example, the constructed graph comprises nodes S1 to S6 representing the roads S1 to S6 and the edges between the nodes their spatial relation. For example, the interconnection between rode S1 and S2 is represented by the edge interconnecting nodes S1 with S2, while the interconnection of road S6 with roads S2, S3, and S4 is represented by the edges interconnecting node S6 with nodes S2, S3, and S4, respectively.

The method then populates 324 the constructed graph with the processed traffic data obtained in step 310. As the roads of the road networks are represented by respective nodes in the graph, the populating of the graph requires associating the traffic data observed in the respective roads with their corresponding node in the graph.

The graph may be further populated with information characterizing the roads in the road network such as the road type, road category, road dimensions, speed limit, number of lanes, lanes dimensions, etc. Similarly to above, this information is populated in the graph also in the form of features associated with the respective nodes. For example, one feature may be used to represent the category of a respective road, while another feature may be used to represent the number of lanes of the respective road, and so on. For example, a node corresponding to a road with one lane may be assigned a lower feature value while a node corresponding to a road with two lanes may be assigned a higher feature value. These features, however, are static as their values do not change over time. FIG.2C shows examples of such features for two nodes, i.e. nodes S1 and S2. This information may be extracted from the road network map or provided by a user. Representing this information in the form of features associated with the respective nodes allows to quantify the road characteristics and therefore enable quantification of the impact of the traffic in one road on the traffic of other roads in the road network.

As a result, the graph is populated with dynamic features corresponding to the traffic information characterizing the traffic in the road network as a function of time as well as static features comprising information characterizing the respective roads in the road network.

The constructed graph may be an undirected or a directed graph. Differently from an undirected graph, the edges in a directed graph have a direction associated with them which allows capturing the directionality of the traffic in the road network. For example, if road S1 is a two-way road, an undirected edge connecting the nodes S1 and S2 may be represented by a pair of edges, one edge with an initial point originating at node S1 and terminal point at node S2 and another edge with an initial point originating at node S2 and a terminal point at node S1. Each of the nodes may also be assigned respective features as described above. For example, different features values may be assigned if the number of lanes of a road in the respective traffic directions is different.

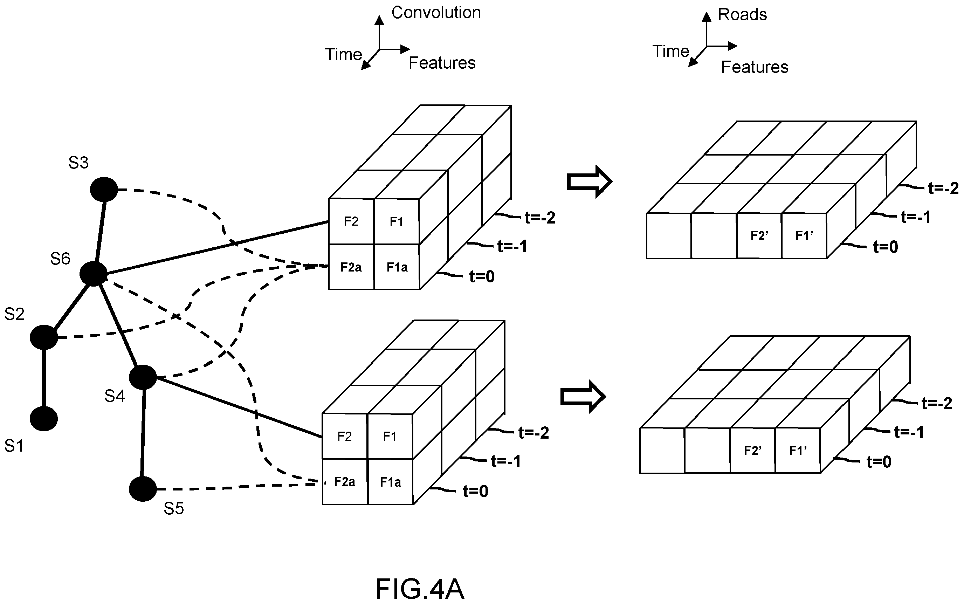

Once the graph is populated with the traffic data, the method proceeds to step 332, where traffic data associated with the respective nodes is convolved 332 with the traffic data of its direct neighbouring nodes. The convolution aims to expand the features of the traffic data associated with a respective node with the features of its neighbouring nodes. The convolution is performed in a node-per-node along the time dimension. To do so, the values of the respective features of the neighbouring nodes are combined and normalized using weights and stacked in the convolution dimension and then convolved. That is, the values of the features of the respective node are convolved with the respective weighted average of the features of the neighbouring nodes. The convolution is performed on a node-per-node basis and along the time dimension. One-dimensional or two-dimensional convolution may be performed. In the case of one-dimensional convolution, the convolution takes into account the values of the features at the respective time interval, e.g. at time interval t=0, while in the two-dimensional convolution, the values of the features at the respecting and several preceding time intervals are also taken into account, e.g. at time intervals t=0, t=-1 and t=-2. FIG.4A shows in detail how the traffic comprising features F1 and F2 associated with nodes S4 and S6 is convolved. In the case of node S4, the values of the features F1 and F2 of its direct neighbouring nodes S5 and S6 are weighted averaged, normalized, to obtain a weighted average of these features, i.e. F1a and F2a, which are then stacked in the convolution dimension as shown in the figure. The weights attributed to the respective features may be defined randomly and are changed during training. Similarly, for node S6, the values of the features F1 and F2 of its neighbouring nodes S2, S3 and S4 are weighted averaged, normalized, and stacked in the convolution dimension. Two-dimensional convolution is then performed in a sliding window manner. At each time interval, the values of the features, e.g. F1 at the current and two past time intervals of node S4, are convolved with the weighted averaged and normalized values of the neighbouring features, e.g. F1a corresponding to the weighted average of the feature F1 at the current and two past time intervals of nodes S5 and S6, respectively. , as shown in FIG.4A. This is applied for all time intervals, i.e. from t=0 to t=n. The result is a new data cube or convolved multivariate time series holding relation-based traffic representation for the respective roads at the respective time intervals. More particularly, the resulting relation-based traffic representation associated with the respective nodes contains an abstract representation of the traffic information of their direct neighbours.

As described above, the convolution is performed on a node-per-node basis for all nodes in the graph. The convolution for the respective nodes may be applied sequentially. To optimize the time efficiency of the convolution, the convolution for the respective nodes may be performed in parallel.

Further, the convolution as described above may be performed not once but several times, or otherwise said the convolution may be performed iteratively. This allows obtaining relation-based traffic representation that holds information about the relation between the traffic in a respective road and the traffic in its direct and indirect neighbouring roads.

In this case, at the first convolution iteration, the convolution for the respective nodes is performed in the same manner as described above, taking into account the traffic information from their direct neighbours. In this example, the convolution will be performed for all nodes in the graph. More specifically, the traffic data of S1 will be convolved with the traffic data of S2, the traffic data of S2 will be convolved with the traffic data of S1 and S6, the traffic data of S6 will be convolved with the traffic data of S2, S3 and S4 and so on. The resulting relation-based traffic representation for the respective nodes will thus contain a partial abstract representation of the traffic information of the direct neighbouring nodes.

In the next iteration, the convolution will be performed, again in the same way as described above, again for all nodes in the graph. More specifically, the resulting relation-based traffic representation of node S1 will be convolved again with the resulting relation-based traffic representation of node S2, the resulting relation-based traffic representation of node S2 will be convolved again with the resulting relation-based traffic representation of S1 and S6, and so on. Thus, in the second iteration, the resulting relation-based traffic representation from the first iteration for the respective nodes now comprises an abstract representation of the traffic data from their respective direct nodes as well as the first order indirect nodes.

The number of convolution iterations depends on the size and structure of the graph, i.e. the size and structure of the road network, as well as the traffic prediction use. For example, for longer-term traffic predictions, e.g. for traffic predictions for the upcoming one to four hours, a better prediction is achieved when using more convolution iterations i.e. using more spatial information. The number of iterations may range from 1 to 5 depending on those conditions.

The result of the convolution step 332 is, thus, a relation-based traffic representation that holds information about the relation between the traffic in a respective road and the traffic in its direct and possibly indirect neighbouring roads over time. In other words, the obtained relation-based traffic representation describes how the traffic in the neighbouring localities affects the traffic in the road in question during a respective time period.

The relation-based traffic representation obtained from the convolution step 332 is then processed 334 by an encoder-decoder. The encoder-decoder is an example of a recurrent neural network, RNN. The encoder-decoder may be implemented in a Long-Short Term Memory, LSTM, architecture. The encoder encodes the relation-based traffic representation into a fixed-length vector and the decoder decodes the fixed-length vector and outputs predicted traffic at several future time intervals. The encoder-decoder is applied in a road-per-road, i.e. a node-per-node, basis sharing knowledge among the network. Thus, knowledge transfer across the roads within one road network and even across different road networks is enabled.

An RNN using LSTM units can be trained in a supervised fashion, on a set of training sequences, using an optimization algorithm, like gradient descent, combined with backpropagation through time to compute the gradients needed during the optimization process, to change each weight of the LSTM network in proportion to the derivative of the error (at the output layer of the LSTM network) concerning corresponding weight.

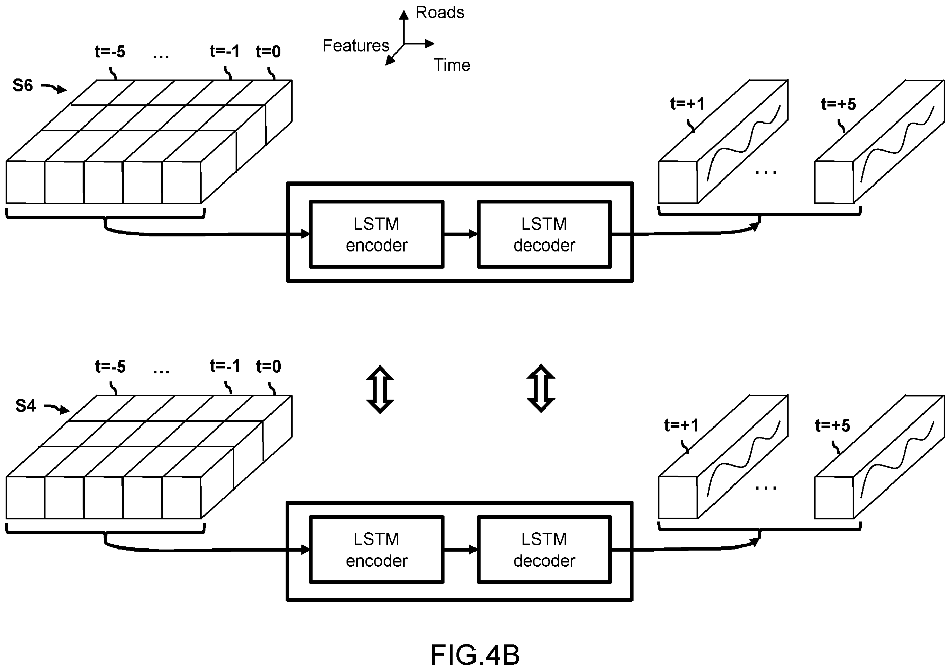

FIG.4B shows in detail how the encoder-decoder architecture is used to predict the traffic for the respective roads, i.e. the roads corresponding to nodes S4 and S6. Similar to the convolution step, convolved multivariate time series is processed in a sliding window manner. In this example, the sliding window is sized to feed the last six values of the respective features, e.g. feature F1', at t=0, t=-1, ..., t=-5, time intervals, to the encoder. The encoder encodes the input data sequence into a fixed-length vector which represents an internal learned representation of the input data sequence. This vector is then fed as an input to the decoder which interprets it and generates an output data sequence that represents the prediction of the traffic data in one or more future time intervals. The output of the respective encoder-decoders is the predicted traffic data, i.e. the values of the various features for the future time intervals. In this example, the respective encoder-decoders predict the values of the features for the future five time intervals, i.e. t=+1, ..., t=+5.

In the next step 336, the performance of the learning model is evaluated based on the leaning model's ability to create traffic data. To do so, the learning system then evaluates the correctness of the predicted traffic information, i.e. the values of the features for the respective nodes at the time intervals t=+1,...,t=+5, with respect to the actual values of the features for the respective nodes at these time intervals. The evaluation is done, as conventionally, using a loss function which estimates the loss between the predicted and the actual traffic data. Based on the estimated loss, the learning model and, more specifically, the weights used in the weighted average, the convolution weights, and the encoder-decoder weights, are updated by employing, a backpropagation mechanism. This results in updating or otherwise said in training the learning model.

The steps of convolving 332, processing 334 and updating 336 are repeated until the learning model achieves a desired level of traffic prediction performance, i.e. until the resulting loss is below a desired level, which marks the completion of the training of the learning model.

As traffic in the different roads exhibits similar trends, the same convolution approach and encoder-decoder may be employed for the respective roads. Further, as the convolution is independent of the graph structure and the encoder-decoder model, the same learning model may be used to interpret the traffic data associated with the different roads in the road network. This also allows transferring knowledge from one graph to another, i.e. from one road network to another.

Once trained, the learning models may be used to predict traffic as illustrated in FIG.3B. In this case, the real-time traffic data obtained from the GPS traces, for example, will be mapped to the graph representation of the road network. The traffic data will be convolved in the same manner as described above with reference to FIG.4A to obtain the relation-based traffic representation of the real-time traffic data observed in n time intervals. The obtained relation-based traffic representation is then fed to the encoder-decoder which processes it as described above with reference to FIG.4B to predict the traffic for m future time intervals.

The above-described traffic prediction technique may be used not only for vehicle traffic prediction but also for foot traffic prediction, such as pedestrian traffic or similar. The foot traffic data may be obtained from GPS traces from for example smart devices such as smartphones and watches. Similar to the vehicle traffic data, the foot traffic data may comprise at least information about the locality type such as walkway, park alleys, office or industrial building, the locality category, dimensions, event types such as sports or music events, date and time, weather, and season.

An example of a data processing enabling suitable for implementing various embodiments of the learning system for traffic prediction according to the present disclosure is described below. The data processing system may, in general, be formed as a suitable for the purpose a general-purpose computer which may comprise a bus, a processor, a local memory, one or more optional input interfaces, one or more optional output interfaces, a communication interface, a storage element interface, and one or more storage elements. The bus may comprise one or more conductors that permit communication among the components of the data processing system. The processor may include any type of conventional processor or microprocessor that interprets and executes programming instructions. The local memory may include a random-access memory, RAM, or another type of dynamic storage device that stores information and instructions for execution by a processor and/or read-only memory, ROM, or another type of static storage device that stores static information and instructions for use by the processor. The input interface may comprise one or more conventional mechanisms that permit an operator or user to input information to the computing device, such as a keyboard, a mouse, a pen, voice recognition and/or biometric mechanisms, a camera, etc., while the output interface may comprise one or more conventional mechanisms that output information to the operator or user, such as a display, etc. The communication interface may comprise any transceiver-like mechanism such as for example one or more Ethernet interfaces that enables the data processing system to communicate with other devices and/or systems, for example with other computing devices such as other network communication nodes in a wireless network. The communication interface of the data processing system may be connected to other computing systems by means of a local area network, LAN, or a wide area network, WAN, such as for example the internet. The storage element interface may comprise a storage interface such as for example a Serial Advanced Technology Attachment, SATA, interface or a Small Computer System Interface, SCSI, for connecting the bus to one or more storage elements, such as one or more local disks, for example, SATA disk drives, and control the reading and writing of data to and/or from these storage elements. Although the storage element(s) above is/are described as a local disk, in general, any other suitable computer-readable media such as a removable magnetic disk, optical storage media such as a CD or DVD, -ROM disk, solid-state drives, flash memory cards, ... could be used. The data processing system could thus correspond to a computing system which may be programmed to carry out the above-described method for traffic prediction.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for training a learning model for traffic prediction at respective localities by means of a learning system comprising a convolution engine and an encoder-decoder, the method comprising:
- constructing (322) a graph representation of the localities based on a spatial relation between the respective localities;
- populating (324) the constructed graph with traffic data characterizing the traffic in the respective localities at respective time periods;
- convolving (332), by the convolution engine, for a respective locality and for a respective time period, the traffic data in the respective locality with the traffic data in its neighbouring localities, thereby obtaining relation-based traffic representation;
- processing (334), by the encoder-decoder, for a respective locality and for a respective time period, the relation-based traffic representation, thereby obtaining a gradient information; and
- updating (336), for a respective locality, the learning model with the obtained gradient information, thereby training the learning model.

2. The computer implemented method according to claim 1, wherein the obtained gradient information is used as gradient information for updating a learning model associated with one or more other localities.

3. The computer implemented method according to claim 1 or 2, wherein the processing (334) further comprises taking into account the relation-based traffic representation for the latest time periods within a selected time interval.

4. The computer implemented method according to any one of the preceding claims, wherein the convolving (332) takes into account information characterizing the respective localities.

5. The computer implemented method according to any one of the preceding claims, wherein the neighbouring localities comprise direct neighbouring localities.

6. The computer implemented method according to claim 5, wherein the neighbouring localities further comprise indirect neighbouring localities.

7. The computer implemented method according to any one of the preceding claims, wherein the traffic data comprises traffic information matched to the respective localities and comprising at least a start time and time duration, a travelled distance, and an average speed.

8. The computer implemented method according to claim 7, wherein the traffic information associated with respective localities is aggregated over a period of time.

9. The computer implemented method according to claim 7 or 8, wherein the traffic information is processed to compensate for missing traffic data.

10. The computer implemented method according to any one of claims 7 to 9, wherein the traffic information is obtained from at least one of GPS tracking systems, traffic cameras, inductive-loops traffic detectors, and GSM networks.

11. The computer implemented method according to any one of the preceding claims, wherein the graph is a directed graph representing a direction of traffic in a respective locality.

12. The computer implemented method according to any one of the preceding claims, wherein the encoder-decoder is a Long Short-Term Memory encoder-decoder.

13. A data processing system programmed for carrying out the method according to any one of claims 1 to 12.

14. A computer program product comprising computer-executable instructions for causing at least one computer to perform the method according to any one of claims 1 to 12 when the program is run on a computer.

15. A computer readable storage medium comprising the computer program product according to claim 14.
